(19) Europäisches Patentamt
European Patent Office
Office européen des brevets

(11) **EP 1 945 721 B1**

(12) **FASCICULE DE BREVET EUROPEEN**

(45) Date de publication et mention de la délivrance du brevet:
**10.08.2016 Bulletin 2016/32**

(21) Numéro de dépôt: **06820148.2**

(22) Date de dépôt: **04.10.2006**

(51) Int Cl.:
**C09C 1/36** *(2006.01)*   **C09C 1/30** *(2006.01)*

(86) Numéro de dépôt international:
**PCT/FR2006/002233**

(87) Numéro de publication internationale:
**WO 2007/042640 (19.04.2007 Gazette 2007/16)**

(54) **SILICES DE SURFACE MODIFIEE PAR DES ACIDES PHOSPHONIQUES**

KIESELSÄUREN MIT PHOSPHONSÄUREMODIFIZIERTEN OBERFLÄCHEN

SILICAS COMPRISING PHOSPHONIC-ACID-MODIFIED SURFACES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.10.2005 FR 0510240**

(43) Date de publication de la demande:
**23.07.2008 Bulletin 2008/30**

(73) Titulaires:
- **Rhodia Opérations**
  **93306 Aubervilliers (FR)**
- **CENTRE NATIONAL DE LA RECHERCHE SCIENTIFIQUE -CNRS- 75016 Paris (FR)**

(72) Inventeurs:
- **LABARRE, Dominique**
  **F-92200 Neuilly (FR)**
- **MUTIN, Pierre**
  **F-34830 Clapiers (FR)**
- **LASSIAZ, Stéphanie**
  **F-91940 Gometz Le Chatel (FR)**
- **GALARNEAU, Anne**
  **F-34250 Palavas Les Flots (FR)**
- **BRUNEL, Daniel**
  **F-34090 Montpellier (FR)**

(74) Mandataire: **Ferri, Isabella**
**Solvay S.A.**
**Viale Lombardia, 20**
**20021 Bollate (MI) (IT)**

(56) Documents cités:
**WO-A-00/69976     FR-A- 2 831 178**
**US-A- 5 837 049     US-A- 5 876 494**

- **PATENT ABSTRACTS OF JAPAN vol. 007, no. 011 (C-145), 18 janvier 1983 (1983-01-18) & JP 57 168954 A (OKAYAMAKEN), 18 octobre 1982 (1982-10-18)**

Remarques:
Le dossier contient des informations techniques présentées postérieurement au dépôt de la demande et ne figurant pas dans le présent fascicule.

**Description**

La présente invention a trait à des silices de surface modifiée par des molécules à caractère hydrophobe, adaptées notamment à titre de charges dans des matrices à base de silicone(s), par exemple destinées à l'enrobage de câbles électriques. Ces silices modifiées seront désignées ci-après par "silices de surface hydrophobisées" ou plus simplement par "silices hydrophobisées". L'invention concerne plus spécifiquement un procédé de préparation de telles silices ayant une surface rendue hydrophobe.

On connaît à l'heure actuelle différents procédés permettant de conférer un caractère hydrophobe à la surface d'une silice, notamment en vue de fournir des silices adaptées à une incorporation au sein de matrices de nature hydrophobe, telles que des matrices polymères ou des silicones.

Dans ce cadre, il a notamment été proposé des modifications de surface de silices par des chaînes hydrophobes, typiquement en traitant la silice par des composés organosilanes porteurs de chaînes organiques hydrophobes, ce qui permet d'obtenir un greffage covalent desdites chaînes organiques sur la surface de la silice par des liaisons de type [silice]-Si=O-[chaîne organique]. Le greffage ainsi obtenu est en général efficace, et il conduit le plus souvent à des silices bien adaptées à titre de charges incorporables à des milieux hydrophobes. Cependant, en marge de ces avantages, il s'avère que, pour être réellement efficace, la mise en oeuvre d'organosilanes doit être effectuée en milieu organique, et de préférence en l'absence d'eau. En effet, l'utilisation d'organosilanes en milieu aqueux ne conduit pas aux greffages homogènes et contrôlés obtenus en milieu solvant. La présence d'eau induit en fait des réactions d'homocondensation des organosilanes, qui conduisent à des phénomènes de gélification du milieu par polymérisation des organosilanes, au détriment du greffage effectif des chaînes hydrophobes sur la surface de la silice.

Une autre solution proposée pour rendre hydrophobe la surface de silices consiste en un traitement par des huiles de silicone, tel que décrit par exemple dans la demande de brevet EP1559744. Un tel traitement conduit à des silices qui sont bien adaptées à titre de charges dans des matrices à base de silicones.

Un but de la présente invention est de fournir un procédé de modification de la surface d'une silice qui puisse être conduit en milieu aqueux, à savoir en présence d'eau et avantageusement sans avoir à mettre en oeuvre de solvants autres que l'eau, et qui permette en particulier un greffage efficace de chaînes hydrophobes sur la surface d'une silice.

JP 57-168954 décrit un procédé conduit en milieu aqueux pour rendre hydrophobe la surface d'une poudre inorganique par dépôt d'un sel d'un ester phosphate ou un acide phosphonique sur la surface de la poudre inorganique, ledit sel étant difficilement soluble dans l'eau. Le sel est un sel de calcium ou magnésium.

FR2831178 décrit des compositions pigmentaires qui comprennent des agents de type colorants, immobilisés à la surface de particules à base de silice. Les espèces colorantes peuvent être des espèces immobilisées par un intermédiaire de liaisons de nature complexant ou électrostatique avec les particules à base de silice. Selon un mode de mis en oeuvre, l'intermédiaire de liaisons est obtenu par traitement d'une silice présentant des cations métalliques en surface avec des agent de couplage comprenant un groupement phosphonique $-PO(OH)_2$, un groupement phosphinique $=PO(OH)$ ou un groupement phosphorique$-O-PO(OH)_2$.

Dans ce cadre, l'invention se fixe notamment pour objectif de fournir des silices de surface hydrophobisée utilisables à titre de charges, notamment à titre de charges renforçantes, dans des matrices hydrophobes, avec de préférence des propriétés au moins similaires à celles des silices hydrophobisées actuellement connues et préparées en milieu non aqueux.

A cet effet, la présente invention a pour objet un procédé de modification de la surface d'une silice qui comprend les étapes successives suivantes :

(A) au sein d'un milieu aqueux, on traite une silice avec des cations d'alumininium capables de se fixer à la surface de ladite silice ; puis

(B) au milieu aqueux obtenu, contenant la silice traitée dans l'étape (A), on introduit des molécules d'au moins un acide phosphonique,
et on laisse réagir ces molécules d'acide phosphonique avec la silice traitée obtenue dans l'étape (A).

Dans le procédé de l'invention, les cations métalliques de l'étape (A) réagissent avec la silice pour modifier ses propriétés de surface, ce par quoi on obtient une silice modifiée (dopée en surface) par les cations métalliques. Par la suite, dans l'étape (B), les molécules d'acide phosphonique introduites réagissent avec la silice de surface modifiée issue de l'étape (A), ce par quoi on obtient *in fine* un greffage des acides phosphoniques à la surface de la silice.

De façon générale, le procédé de l'invention peut être utilisé pour la préparation de silices fonctionnalisées par divers groupes fonctionnels, sous réserve d'adapter la nature des acides phosphoniques utilisés. Par exemple; on pourra utiliser des acides phosphoniques porteurs d'un ou plusieurs groupe(s) fonctionnel(s), susceptible de conférer à la silice hydrophobisée obtenue à l'issue du procédé une fonctionnalité de surface, par exemple des propriétés catalytiques, ou bien encore des fonctions conduisant à des silices utilisables pour la détection de molécules, notamment biologiques.

Selon un mode de réalisation particulièrement intéressant, le procédé de modification de surface de l'invention est mis à profit pour préparer des silices greffées en surface par des chaînes hydrophobes. Dans ce cas, les molécules d'acide phosphonique introduites dans l'étape (B) sont spécifiquement porteuses de chaînes hydrophobes. Le procédé de l'invention conduit alors à un greffage de chaînes hydrophobes R à la surface de la silice, qui induit l'hydrophobisation de surface recherchée. Selon ce mode de réalisation, les molécules d'acide phosphonique introduites dans l'étape (B) répondent de préférence à la formule (I) suivante :

$$R\text{-}PO(\text{-}OH)_2 \qquad (I)$$

où R est une chaîne hydrophobe.

Par "chaîne hydrophobe", on entend, au sens de la présente description, une chaîne hydrocarbonée, insoluble dans l'eau, capable de rendre la surface de la silice traitée plus hydrophobe que celle de la silice initiale. Dans la formule (I), le groupement R est généralement un groupe hydrocarboné linéaire ou ramifié, éventuellement cyclique ou porteur d'un ou plusieurs cycles, qui comprend typiquement de 3 à 30, par exemple de 6 à 20 atomes de carbone. Sous réserve de conserver un caractère hydrophobe, le groupement R peut éventuellement contenir en outre un ou plusieurs hétéroatomes (O, S ou N par exemple).

De préférence, les acides phosphoniques utilisés dans l'étape (B) sont hydrosolubles, malgré la présence de la chaîne hydrophobe R.

Selon un mode de réalisation particulier, la chaîne hydrophobe R qui est présente sur les acides phosphoniques de formule (I) et qui se retrouve finalement greffée sur la silice hydrophobisée préparée selon l'invention est une chaîne alkyle, alcényle, alcynyle, aryle ou aralkyle, comportant avantageusement de 3 à 18 atomes de carbone, par exemple entre 6 et 15, notamment entre 8 et 12 atomes de carbone. Typiquement, le groupe R est une chaîne alkyle, le composé (I) étant alors un acide alkylphosphonique. A titre d'acide alkylphosphonique particulièrement adapté à la mise en oeuvre de l'invention, on peut citer, entre autres, l'acide octylphosphonique de formule $C_8H_{17}PO(OH)_2$, ou bien encore l'acide propylphosphonique $C_3H_7PO(OH)_2$.

Quelle que soit la nature exacte des groupements R, les étapes (A) et (B) du procédé de l'invention permettent un greffage particulièrement efficace de ces chaînes hydrophobes sur la surface de la silice. A ce sujet, sans vouloir être lié par une théorie particulière, les travaux des inventeurs permettent d'avancer que, dans le cas le plus général, les silices hydrophobisées obtenues dans le cadre de l'invention présentent des chaînes hydrophobes R liées à la surface de la silice par des liaisons covalentes répondant à la formule schématique suivante :

[silice]-Si-O-M-O-P-R

dans laquelle M désigne le métal d'un cation mis en oeuvre dans l'étape (A).

De plus, l'invention permet d'obtenir ce greffage efficace des chaînes R selon un procédé qui est généralement rapide et simple à mettre en oeuvre. Ainsi, les étapes (A) et (B) sont généralement effectuées au sein d'un unique milieu aqueux, où on fait d'abord réagir la silice avec les cations métalliques dans l'étape (A), et où on ajoute ensuite les molécules d'acide(s) phosphonique(s) dans l'étape (B), le plus souvent sans étape intermédiaire entre les étapes (A) et (B). Dans ce cadre, les étapes (A) et (B) sont typiquement conduites dans un unique réacteur, au sein duquel on introduit successivement les différents réactifs (procédé de type "one pot"). Il est en particulier à souligner que la modification de la silice de l'étape (A) ne requiert pas un séchage de la silice préalablement à l'étape (B). Au contraire, de façon surprenante, les inventeurs ont mis en évidence qu'un séchage intermédiaire de la silice entre les étapes (A) et (B) est en général à proscrire si on souhaite obtenir un greffage optimal des chaînes hydrophobes R sur la surface de la silice.

Compte tenu de ces différents avantages, le procédé de l'invention s'avère particulièrement intéressant, notamment d'un point de vue économique, ce qui le rend adapté en particulier à une mise en oeuvre à grande échelle.

En outre, les étapes (A) et (B) du procédé présentent la spécificité d'être conduites au sein d'un milieu aqueux, ce qui constitue encore un autre avantage, notamment d'un point de vue des répercussions sur l'environnement. Par "milieu aqueux", on entend ici un milieu liquide à base d'eau, capable à la fois de disperser la silice et de véhiculer les cations métalliques dans l'étape (A), et les acides phosphoniques de l'étape (B). Les milieux aqueux des étapes (A) et (B) contiennent en général de l'eau à titre d'unique solvant et dispersant. Selon un mode de réalisation particulier, ces milieux aqueux peuvent toutefois comprendre un solvant ou dispersant additionnel, généralement hydrosoluble, par exemple un alcool tel que l'éthanol, notamment dans le cas de l'utilisation d'acides phosphoniques difficilement solubles dans l'eau seule. Le cas échéant, il est toutefois préférable que l'eau reste le solvant/dispersant majoritaire du milieu aqueux, à savoir qu'elle représente au moins 50% en masse, de préférence au moins 80% en masse et plus préférentiellement au moins 90% en masse de la masse totale des solvants/dispersants. La présence de tels solvants ou dispersants additionnels n'est toutefois pas nécessaire dans la plupart des cas. Ainsi, le procédé de l'invention peut en particulier être conduit en l'absence de tout solvant organique, ce qui évite les problèmes de gestion d'effluents organiques rencontrés avec les procédés de l'état de la technique qui mettent en oeuvre des organosilanes ou des huiles de silicones.

Dans le procédé de l'invention, le prétraitement de la silice de l'étape (A) est particulièrement important. Il est en effet à souligner qu'en milieu aqueux, un greffage direct d'acide phosphonique de formule (I) sur une silice non préalablement traitée par un cation métallique ne conduirait pas à un greffage de chaînes R sur la silice, dans la mesure où les liaisons de type Si-O-P-O-R qui seraient susceptibles de se former ne sont pas stables en milieu aqueux.

Pour assurer une modification adéquate de la silice dans l'étape (A) , qui permet notamment un greffage particulièrement rapide et efficace de chaînes R, les cations métalliques de l'étape (A) sont des cations d'aluminium, typiquement des cations $Al^{3+}$.

Selon un mode de l'invention particulièrement avantageux, la réaction de l'étape (B) est conduite avec un pH initial de 6 à 10, de préférence de 6,5 à 8,5. Cette gamme de pH permet en effet un greffage optimal des chaînes R à la surface de la silice. En particulier, il s'avère qu'un pH supérieur ou égal à 6 inhibe la réaction parasite de formation de phosphonate d'aluminium cristallin qui est observée à des valeurs de pH inférieures où elle concurrence la réaction de greffage des chaînes R sur la silice, cette inhibition étant encore plus marquée à pH supérieur à 6,5. Par ailleurs, on préfère conduire l'étape (B) avec un pH initial inférieur ou égal à 10, et plus préférentiellement inférieur à 8,5, notamment pour maintenir une bonne stabilité du traitement de surface de la silice tel qu'obtenu à l'issue de l'étape (A).

Ainsi, lorsque les cations métalliques de l'étape (A) sont des cations d'aluminium, tels que des cations $Al^{3+}$, les étapes (A) et (B) sont avantageusement conduites dans les conditions suivantes :

(A) au sein d'un milieu aqueux, on traite une silice par des cations d'aluminium; puis

(B) au milieu aqueux obtenu, contenant la silice traitée dans l'étape (A), on ajoute des molécules d'au moins un acide phosphonique répondant à la formule (I) précitée, et on laisse réagir ces molécules d'acide phosphonique avec la silice traitée avec un pH initial du milieu réactionnel de 6 à 10, de préférence de 6,5 à 8,5.

Dans le cadre de cette variante particulière du procédé, le traitement de l'étape (A) est avantageusement conduit dans la même gamme de pH que l'étape (B), à savoir à un pH de 6 à 10, de préférence de 6,5 à 8,5. Selon un mode intéressant, les étapes (A) et (B) sont conduites sensiblement au même pH, typiquement à un pH de 6,5 à 8,5, par exemple de 6,5 à 7,5. A cet effet, on peut par exemple introduire l'acide phosphonique de l'étape (B) sous la forme d'une solution ayant le même pH que le milieu issu de l'étape (A).

De façon plus générale, les étapes (A) et (B) du procédé sont le plus souvent conduites dans des conditions de pH similaires. Néanmoins, selon un mode de réalisation envisageable, l'étape (B) peut, dans certains cas, être précédée d'une étape d'adaptation des conditions du milieu (pH, température, force ionique par exemple), conduite à l'issue de l'étape (A). Ce mode particulier est notamment adapté lorsque la modification de surface de l'étape (A) et la réaction de l'étape (B) nécessitent des conditions de réactions distinctes pour être conduites de façon optimales. Ainsi, par exemple, il arrive que la mise en oeuvre de certains cations métalliques implique pour le traitement l'étape (A) une gamme de pH différente de celle requise pour une réaction optimale lors de l'étape (B). Dans un pareil cas, le procédé comprendra avantageusement une étape d'adaptation du pH entre les étapes (A) et (B).

Les cations métalliques de l'étape (A), sont généralement introduits dans le milieu aqueux sous forme de sels hydrosolubles. Ces sels peuvent être des sels inorganiques (chlorures, sulfates, nitrates...) ou bien organiques (acétates, citrates ...). Ils sont avantageusement introduits dans le milieu aqueux sous forme d'un sel d'aluminium hydrosoluble, choisi de préférence parmi le chlorure d'aluminium, le fluorure d'aluminium, le sulfate d'aluminium, le nitrate d'aluminium, le citrate d'aluminium, l'acétate d'aluminium, et les mélanges de ces sels. Un sel d'aluminium particulièrement intéressant pour réaliser le traitement de l'étape (A) est le chlorure d'aluminium $AlCl_3$.

Dans le cas le plus général, l'étape (A) du procédé de l'invention est le plus souvent conduite en réalisant une dispersion de la silice à traiter dans une solution aqueuse d'un ou plusieurs sel(s) d'aluminium. Selon un mode de réalisation typique, on peut conduire l'étape (A) en mélangeant une dispersion aqueuse de la silice à traiter à une solution aqueuse d'au moins un sel des cations métalliques.

Le procédé de l'invention est adapté à la modification de la plupart des silices initialement hydrophiles et comportant initialement des espèces silanols SiOH en surface. La silice initialement introduite dans l'étape (A) peut être toute silice non traitée et non dopée ; elle peut consister en une silice de précipitation, une fumée de silice, ou une silice pyrogénée. Le procédé de l'invention est particulièrement bien adapté au traitement de silices de précipitation.

Bien qu'il soit adapté à la modification de surface de la plupart des silices, le procédé de l'invention trouve une application particulièrement intéressante pour le traitement de silice développant une surface d'échange suffisamment élevée. Dans ce cadre, il est en général avantageux que la silice traitée dans l'étape (A) ait initialement une surface spécifique BET d'au moins 50 $m^2/g$, avantageusement comprise entre 50 et 400 $m^2/g$, notamment entre 50 et 300 $m^2/g$, typiquement entre 100 et 250 $m^2/g$, et par exemple entre 100 et 200 $m^2/g$. Au sens de la présente description, on entend par "surface spécifique SET" la surface spécifique de la silice telle que déterminée selon la méthode de BRUNAUER - EMMET - TELLER décrite dans *"The journal of the American Chemical Society, volume 60, page 309, février 1938, et correspondant à la norme internationale ISO 5794/1 (annexe D).*

Par ailleurs, il est le plus souvent préférable que la silice qui est soumise au traitement de l'étape (A) soit introduite dans le milieu aqueux sous la forme d'objets dispersés (particules, agrégats ou agglomérats) ayant des dimensions inférieures à 1 $\mu$m (micron), et de préférence inférieure à 500 nm, et plus préférentiellement encore inférieure à 200 nm. Selon un mode de réalisation particulier, la silice est dispersée dans le milieu de l'étape (A) sous forme d'objet de dimensions nanométriques, ayant typiquement des dimensions inférieures à 100 nm.

Quelle que soit la nature de la silice utilisée, celle-ci est de préférence dispersée dans le milieu de l'étape (A) à une concentration comprise entre 20 et 500 g/L, par exemple entre 30 et 200 g/L, typiquement entre 50 et 150 g/L.

Dans l'étape (A), un paramètre généralement important à maîtriser est le rapport de la quantité de cations introduite par rapport aux sites de fixation de type silanol disponibles sur la silice. En effet, ce rapport est directement corrélé au taux de couverture de la surface de la silice par les chaînes hydrophobes R à l'issue du procédé, dans la mesure où les acides phosphoniques introduits dans l'étape (B) se fixent uniquement sur les sites silanols modifiés par les cations métalliques. Dans ce cadre, on définit un taux de recouvrement théorique de la surface de la silice par les cations métalliques introduits, reflétant le rapport de la quantité de cations introduits rapportée à la surface disponible de silice. Ce taux de recouvrement $T_{cat}$, exprimé en nombre de cations par nm$^2$, est calculé par la formule suivante :

$$T_{cat} = (C_{cat} . N_a) / (S_{BET} . M_{cat} . C_{sil})$$

dans laquelle :

- $C_{cat}$ désigne la concentration initiale en cations métalliques, en g/L ;
- Na désigne le nombre d'Avogadro, en mol$^{-1}$ ;
- $S_{BET}$ désigne la surface spécifique de la silice, convertie en nm$^2$/g ;
- $M_{cat}$ désigne la masse molaire des cations métallique, en g/mol ;
- $C_{sil}$ désigne la concentration en silice, en g/L.

Le plus souvent, il est avantageux de conduire le procédé de l'invention de façon à greffer des chaînes hydrophobes R sur l'ensemble, ou tout au moins sur une majeure partie, de la surface disponible de la silice, par ce par quoi on obtient une hydrophobisation optimale de la surface. A cet effet, il est préférable que le taux de recouvrement théorique de la surface de la silice par les cations d'aluminium introduits dans l'étape (A) soit d'au moins 6 Al/nm$^2$, typiquement entre 6 et 8 Al/nm$^2$

Selon un autre mode de réalisation envisageable, le procédé de l'invention peut être conduit, à l'inverse, pour obtenir un greffage de chaînes hydrophobes R sur une partie seulement de la surface disponible de la silice. A cet effet, les cations métalliques sont introduits en quantité sub-stoechiométrique par rapport à la quantité de sites silanols présents sur la surface de la silice. Dans ce cadre, le taux de recouvrement théorique de la surface de la silice par les cations introduits dans l'étape (A) est de préférence inférieur aux taux indiqués'dans le paragraphe précédent. En particulier, le taux de recouvrement théorique de la surface de la silice par les cations d'aluminium est inférieur 5 Al/nm$^2$, par exemple inférieur à 3 Al/nm$^2$ voire inférieur à 2 Al/nm$^2$, ce taux restant néanmoins le plus souvent au moins égal à 0,5 Al/nm$^2$ par exemple au moins égal à 1 Al/nm$^2$. Ce mode de réalisation particulier de l'invention peut avantageusement être utilisé pour préparer une silice greffée par des chaînes hydrophobes R, mais conservant néanmoins des groupes silanols libres. Avec une telle silice partiellement greffée, les groupes silanols libres sont disponibles en particulier pour réagir avec des espèces de type organosilanes, ce qui permet la préparation de silices greffées à fonctionnalité duale, à savoir greffées à la fois par les chaînes hydrophobes R introduites dans l'étape (B) et par d'autres groupements apportés par les organosilanes.

Dans la plupart des cas, sous réserve de maintenir le milieu sous une agitation minimum, l'étape (A) s'effectue de façon directe et rapide, le plus souvent sans avoir à chauffer le milieu. Ainsi, la durée du traitement de l'étape (A) est en général comprise entre quelques minutes et quelques heures, typiquement entre 5 minutes et 2 heures, par exemple entre 20 et 40 minutes. Par ailleurs, l'étape (A) peut typiquement être conduite à une température comprise entre 10 et 50 °C, et le plus souvent à température ambiante (par exemple entre 15 et 25 °C).

Quel que soit son mode de réalisation exacte, l'étape (A) conduit à la formation d'un milieu aqueux qui contient une silice traitée par les cations métalliques initialement introduits dans le milieu aqueux de l'étape (A). Il est à noter que cette silice modifiée n'est pas simplement une silice à la surface de laquelle serait déposé un oxyde métallique à base des cations métalliques de l'étape (A) et qui se comporterait donc globalement comme un tel oxyde. Au contraire, les travaux des inventeurs montrent que la modification de surface de l'étape (A) conduit à une silice modifiée très spécifique. En particulier, les inventeurs ont mis en évidence que des particules de silice traitées par des cations Al$^{3+}$ dans l'étape (A) se comportent dans l'étape (B) de façon distincte de particules d'alumine. Ces tests montrent en particulier que la modification de surface apportée dans l'étape (A) est relativement fragile, ce qui semble s'expliquer au moins en partie par la présence de ponts de type Al-O(H)-Si qui rendent la silice modifiée sensible à l'hydrolyse.

Compte tenu de la spécificité de la silice traitée obtenue à l'issue de l'étape (A), il s'avère en général préférable de conduire l'étape (B) à un pH non susceptible de dégrader le traitement de surface obtenu dans l'étape (B). C'est notamment pour cette raison qu'on préfère généralement conduire les étapes (A) et (B) dans des conditions de pH similaires, voire identiques. Ainsi, il est préférable de conduire l'étape (A) et l'étape (B) à des valeurs de pH comprises entre 6,5 et 8,5, ce qui permet un traitement de surface optimal dans l'étape (A) et permet en outre de ne pas affecter la stabilité de ce traitement de surface dans l'étape (B).

Par ailleurs, la force ionique du milieu dans l'étape (B) est de préférence non nulle. Dans ce cadre, il est le plus souvent indiqué de conduire l'étape (B) avec une force ionique dans le milieu réactionnel comprise entre 0,1 et 2, préférentiellement entre 0,9 et 2,00. Une telle force ionique correspond par exemple à des ajouts de NaCl dans le milieu à des concentrations comprises entre 6 g/L et 120 g/L, préférentiellement entre 50 g/L et 120 g/L.

Un autre paramètre généralement important dans l'étape (B) est la température. Le plus souvent, il est indiqué de conduire l'étape (B) à une température inférieure à 50 °C, de préférence inférieure à 40 °C. Ainsi, typiquement, l'étape (B) est conduite à température ambiante (par exemple entre 15 et 25 °C). Ainsi, selon un mode de réalisation particulièrement intéressant, les étapes (A) et (B) peuvent être conduites à température ambiante (par exemple entre 15 et 25 °C). Ces conditions de réactions, associées à la possibilité de mettre en oeuvre la réaction au sein d'un milieu exclusivement aqueux, rendent le procédé particulièrement adapté à une mise en oeuvre à l'échelle industrielle.

De façon plus générale, l'étape (B) est avantageusement conduite dans les conditions préférentielles exposées ci-dessous.

En règle générale, dans l'étape (B), la réaction de la silice modifiée avec les molécules d'acide phosphonique est de préférence réalisée dans un milieu aqueux où la silice modifiée est dispersée à une concentration inférieure à celle de l'étape (A). A cet effet, le milieu est avantageusement dilué par addition d'eau. Cette dilution est en général effectué en introduisant les molécules d'acide phosphonique en solution dans l'eau et éventuellement en introduisant en outre de l'eau de dilution sous forme séparée. Typiquement, la concentration en silice dans le milieu aqueux de l'étape (B) est comprise entre 10 et 200 g/L, par exemple entre 20 et 100 g/L, avantageusement entre 40 et 60 g/L.

La concentration initiale en acide(s) phosphonique(s) introduit(s) dans le milieu aqueux de l'étape (B) peut quant à elle être par exemple comprise entre 1 et 50 g/L, par exemple entre 5 et 20 g/L, notamment de l'ordre de 10g/L. Comme pour les cations métalliques de l'étape (A), on peut définir un taux de recouvrement théorique de la surface de la silice par les acides phosphoniques introduits dans l'étape (B), qui reflète le rapport de la quantité de têtes acides phosphoniques introduites dans le milieu rapportée à la surface disponible de silice. Ce taux de recouvrement théorique $T_{phos}$, exprimé en P/nm$^2$ (nombre d'atome de phosphore par, nm$^2$) est calculé par la formule suivante :

$$T_{phos} = (C_{phos} \cdot n_{phos} \cdot N_a) / (S_{BET} \cdot M_{phos} \cdot C_{sil})$$

dans laquelle :

- $C_{phos}$ désigne la concentration initiale en cations métalliques , en g/L ;
- $n_{phos}$ désigne le nombre de tête acide phosphonique sur les molécules d'acide introduite, ce nombre étant en général égal à 1 ($n_{phos}$ peut exceptionnellement être égal à 2 ou plus, dans le cas où les acides phosphoniques de formule (I) utilisés sont des acides di- ou multi-phosphoniques, à savoir où la chaîne hydrophobe R comporte un ou plusieurs groupes phosphonates à titre de groupes fonctionnels)
- $N_a$ désigne le nombre d'Avogadro, en mol$^{-1}$ ;
- $S_{BET}$ désigne la surface spécifique de la silice, convertie en nm2/g ;
- $M_{phos}$ désigne la masse molaire des cations métallique, en glmol ;
- $C_{sil}$ désigne la concentration en silice, en g/L.

Dans le cas où le procédé de l'invention est conduit de façon à couvrir un maximum de la surface de la silice par des chaînes hydrophobes R, il est préférable que la quantité d'acide phosphonique introduite dans l'étape (B) soit de l'ordre de la quantité permettant la formation d'une monocouche d'acide phosphonique sur la surface disponible de la silice. A cet effet, le taux $T_{phos}$ de recouvrement théorique de la surface de la silice par les acides phosphoniques introduits dans l'étape (B) tel que défini ci-dessus est avantageusement de l'ordre de 4,7 P/nm$^2$, typiquement entre 4 et 5 P/nm$^2$. Selon ce mode de réalisation, il est souhaitable que la surface de la silice ait été traitée le plus complètement possible dans l'étape (A), à savoir avec un taux de recouvrement théorique $T_{cat}$ de la surface de la silice par les cations métalliques introduits dans l'étape (A) de préférence d'au moins 4 cations par nm$^2$ (plus préférentiellement d'au moins 6 cations par nm$^2$ dans le cas de cations d'aluminium).

Au contraire, lorsqu'on souhaite obtenir un greffage d'une partie seulement de la silice, le taux $T_{phos}$ de recou-

vrement théorique de la surface de la silice par les acides phosphoniques introduits dans l'étape (B) est en général inférieur à 4 P/nm$^2$. Dans ce cas de figure, le taux de recouvrement théorique $T_{phos}$ dans l'étape (B) est avantageusement sensiblement égal au taux de recouvrement théorique $T_{cat}$ de l'étape (A). Ainsi, selon ce mode de réalisation spécifique, le taux de recouvrement théorique $T_{phos}$ est typiquement inférieur a 3 P/nm$^2$, par exemple inférieur à 2 P/nm$^2$, voire inférieur à 1 P/nm$^2$.

Dans le cas le plus général, il s'avère le plus souvent avantageux de conduire l'étape (B) en introduisant les molécules d'acide phosphonique de formule (I) en quantité stoechiométrique ou sub-stoechiométrique par rapport aux sites réactifs de la silice modifiée issue de l'étape (A). Par "sites réactifs", on entend ici les sites silanols qui ont été modifiés par les cations métalliques introduits dans l'étape (A). Dans ce cadre, de façon surprenante, les inventeurs ont en effet mis en évidence qu'un excès d'acide phosphonique peut être nuisible à l'efficacité du greffage. Plus précisément, il s'avère que, lorsqu'ils sont introduits en excès, les acides phosphoniques conduisent le plus souvent à une déstabilisation du greffage de la silice. Ce phénomène de déstabilisation est particulièrement net dans le cas de la mise en oeuvre de cations d'aluminium de type Al$^{3+}$ dans l'étape (A), ce qui semble s'expliquer notamment par la polarité particulière des liaisons de type Si-O-Al. Compte tenu de ces éléments, on préfère le plus souvent que le taux de recouvrement théorique $T_{phos}$ soit inférieur à 4,7 P/nm$^2$ dans l'étape (B), et ce même lorsque l'on cherche à greffer un maximum de chaînes hydrophobe R sur la surface de la silice. Plus avantageusement encore, ce taux reste inférieur à 4,5 P/nm$^2$, voire à 4,3 P/nm$^2$.

Ainsi, selon un mode de réalisation avantageux de l'invention, le procédé peut être mis en oeuvre pour la préparation d'une silice où les chaînes R sont greffées sur sensiblement toute la surface disponible de ladite silice. Le cas échéant, les étapes (A) et (B) sont avantageusement conduites dans les conditions suivantes :

- dans l'étape (A) : la quantité de cations introduite dans le milieu aqueux est telle que taux de recouvrement théorique $T_{cat}$ de la surface de la silice par les cations d'aluminium, notamment de type Al$^{3+}$; introduits est d'au moins 6 Al/nm$^2$, par exemple entre 6 et 8 Al/nm$^2$.

- dans l'étape (B) : le taux de recouvrement théorique $T_{phos}$ de la surface de la silice par les acides phosphoniques introduits est compris entre 4 et 5 P/nm$^2$, ce taux étant de préférence inférieur à 4,7 P/nm$^2$, préférentiellement inférieur à 4,5 P/nm$^2$, voire inférieur à 4,2 P/nm$^2$.

Selon un autre mode de réalisation, le procédé peut être mis en oeuvre pour la préparation d'une silice pour laquelle les chaînes R sont greffées sur une partie seulement de la surface disponible de ladite silice. Selon cette variante du procédé, les étapes (A) et (B) sont avantageusement conduites dans les conditions suivantes :

- dans l'étape (A) : les cations métalliques sont introduits en quantité sub-stoechiométrique par rapport à la quantité de sites silanols présents sur la surface de la silice. Le taux de recouvrement théorique de la surface de la silice par les cations d'aluminium introduits est compris entre 0,5 et 4 Al/nm$^2$, par exemple entre 1 et 3 Al/nm$^2$.

- dans l'étape (B) : le taux de recouvrement théorique $T_{phos}$ de la surface de la silice par les acides phosphoniques est inférieur à 4 P/nm$^2$, et en général sensiblement égal au taux de recouvrement $T_{cat}$ de l'étape(A).

Dans le cas le plus général, la réaction de l'étape (B) est très simple à mettre en oeuvre, dans la mesure où elle s'opère par simple addition des molécules d'acide phosphonique au sein du milieu aqueux. Il est toutefois à noter que la durée de réaction de l'étape (B) est, en général, un peu plus longue que celle de l'étape (A). Néanmoins, le plus souvent, un greffage efficace ne nécessite tout au plus que quelques heures de réactions, typiquement entre 15 minutes et 2 heures, par exemple de l'ordre de 30 minutes.

A l'issue des étapes (A) et (B) précitées, on obtient la silice hydrophobisée recherchée en dispersion au sein d'un milieu aqueux, qui peut contenir, outre de l'eau, des cations résiduels issus de l'étape B et éventuellement. En règle générale, il est souhaitable d'isoler la silice hydrophobisée de ce milieu aqueux. A cet effet, le procédé de l'invention comporte le plus souvent une étape (C) d'isolement de la silice hydrophobisée obtenue à l'issue de l'étape (B).

Cette étape (C) comporte avantageusement une séparation de type solide/liquide, par exemple une filtration du milieu aqueux obtenu, ou mieux une centrifugation. Le solide issu de cette séparation solide/liquide est ensuite avantageusement soumis à un ou plusieurs lavage, typiquement par de l'eau ou éventuellement par une solution aqueuse de lavage (mélange eau/éthanol par exemple), ce qui permet en particulier d'éliminer les sels ou les acides phosphoniques résiduels. Ce ou ces lavages peuvent être notamment effectué sur filtre, ou bien par redispersion du solide dans de l'eau ou dans une solution de lavage puis centrifugation. Suite à ces étapes de séparation et de lavage éventuel, la silice hydrophobisée est avantageusement soumise à une étape de séchage, en particulier lorsqu'elle est destinée à une application où la présence d'eau doit être évitée.

A l'issue de ces différentes étapes, on obtient une silice hydrophobisée particulière, qui constitue, selon un aspect particulier, un autre objet de la présente invention.

Les silices hydrophobisées telles qu'obtenues selon le procédé de l'invention présentent, de façon caractéristique, des chaînes hydrophobes R en surface. La présence de ces chaîne peut notamment être mise en évidence par spectrométrie infrarouge, par exemple par spectroscopie infrarouge en réflexion diffuse, qui met en évidence des bandes d'absorption caractéristiques de telles chaînes hydrophobes (par exemple des bandes dans la région 2800 à 3000 cm$^{-1}$ pour des chaînes alkyles).

Le taux de couverture de la silice par les chaînes hydrophobes R peut notamment être établi par analyse élémentaire de la silice, ce qui permet en particulier d'accéder au taux de carbone contenu dans la silice testée. Selon le procédé de l'invention, on peut obtenir des silices hydrophobisées ayant un taux de couverture par les chaînes hydrophobes R très important, pouvant aller jusqu'à 2 chaînes R greffées par nm$^2$, voire jusqu'à 3 chaînes R greffées par nm$^2$ et même jusqu'à 3,5 chaînes R greffées par nm$^2$ ou plus. En contrôlant les conditions de synthèse, notamment en mettant en oeuvre les différents modes de réalisation préférentiels définis plus haut dans la présente description, on arrive même à obtenir un taux de couverture de l'ordre de 4, à savoir très proche de la couverture totale de la surface disponible de la silice par une monocouche de chaînes R.

D'autre part, les silices hydrophobisées obtenues selon l'invention comportent en surface des liaisons de type R-P-O-M-O-Si caractéristiques, dont la présence peut être établie notamment par spectrométrie par résonance magnétique (RMN) du phosphore, et notamment par RMN $^{31}$P en phase solide. Dans le cas où M est l'aluminium, les spectres RMN obtenus comportent un pic dans la zone entre 0 à 30 ppm, caractéristique de la présence des liaisons R-P-O-Al-O-Si.

Par ailleurs, les silices hydrophobisées obtenues selon le procédé de l'invention présentent généralement une morphologie relativement similaire à celle de la silice initiale non hydrophobisée. Cette similitude peut notamment être mise en évidence par microscopie électronique à transmission. En outre, les silices hydrophobisées obtenues selon l'invention présentent une surface spécifique BET qui est généralement proche de celle des silices de départ (les silices hydrophobisées ont en général une surface spécifique légèrement inférieure à celle des silices initiales). Ainsi, le procédé de l'invention permet en général d'obtenir des silices de surface hydrophobisée ayant une surface spécifique déterminée. A cet effet, il convient de choisir comme silice de départ une silice de surface BET légèrement supérieure à la surface BET recherchée pour la silice finale.

En outre, le procédé de l'invention permet d'obtenir des silices de surface hautement hydrophobisée; et ce le plus souvent avec une bonne homogénéité du traitement de surface. Le degré d'hydrophobisation de la silice obtenue peut notamment être quantifié par le test dit du "méthanol number" tel qu'illustré dans l'exemple 7 ci-après, dans lequel on quantifie l'hydrophobie de surface de la silice par sa différence de mouillabilité par l'eau et le méthanol. Les silices de l'invention ont un "méthanol number" (MN) tel que déterminé dans ce test qui peut aller jusqu'à 40, voire jusqu'à 60, ce qui correspond à des hydrophobisations particulièrement élevées.

Compte tenu de ces différentes propriétés, les silices hydrophobisées de l'invention se révèlent particulièrement intéressantes à titre de charges, notamment renforçantes, dans des compositions hydrophobes.

Elles peuvent être utilisées à titre de charges, notamment renforçantes, dans des matrices à base de silicone(s).

Elles trouvent une application intéressante dans le renforcement de compositions (matrices) organosiliciques élastomères ou pâteuses vulcanisables à chaud (silicones HTV par exemple) ou à froid, par exemple destinées à une fonction d'enrobage, comme l'enrobage de câbles électriques. Lesdites compositions à base de silicone(s), en particulier celles destinées à une fonction d'isolation, peuvent être mises en forme par extrusion, avant d'être réticulées. L'utilisation de ces silices peut éviter ou limiter la formation de bulles, notamment lors de l'extrusion. Ces matrices à base de silicone(s) peuvent également être mises en forme par moulage. Ces silices peuvent conférer aux matrices silicones de très bonnes propriétés.

La nature du ou des organopolysiloxanes vulcanisables contenus dans ce type de matrices, ainsi que celle des agents de vulcanisation et des autres additifs éventuellement présents, de même que les conditions de vulcanisation, sont bien connues de l'homme du métier ; celles-ci sont par exemple décrites dans la demande WO 03/055801.

La quantité de silice pouvant être mise en oeuvre pour le renforcement desdites matrices à base de silicone(s) peut par exemple être comprise entre 3 et 20 %, notamment lorsqu'il s'agit d'une pâte silicone, ou entre 5 et 50 %, de préférence entre 10 et 40 %, notamment lorsqu'il s'agit d'une composition de nature élastomère.

Les silices hydrophobisées de l'invention peuvent être également employées par exemple :

- à titre de charge renforçante dans une matrice à base d'élastomères, en particulier clair(s) ou semi-clair(s), pour semelles de chaussures,

- à titre de charge dans une matrice thermoplastique,

- à titre de support de liquide (par exemple utilisé dans l'alimentation, comme les vitamines (vitamine E notamment), le chlorure de choline),

- à titre d'additif pour dentifrice,

- à titre d'additif pour peinture, papier, béton

- pour la préparation de séparateurs de batterie.

Les silices hydrophobisées de l'invention peuvent être porteuses de groupements R fonctionnels. Ces silices spécifiques trouvent des applications particulières en fonction de leur fonctionnalité de surface apportée par les groupements R, par exemple dans le domaine de la catalyse. Dans de cadre, selon un mode avantageux, il est intéressant d'utiliser des silices selon l'invention qui sont porteuses de groupements R sur une partie seulement de leur surface et qui présentent par ailleurs des groupes silanols disponibles. De telles silices hydrophobisées seulement en partie sont utiles à titre d'intermédiaires pour la synthèse de silices porteuses à la fois des chaînes hydrophobes R précités et, d'autres groupes, introduits en faisant réagir les groupements silanols libres de la surface avec des composés de type organosilanes.

Différents aspects et avantages de l'invention ressortiront encore plus nettement des exemples illustratifs exposés ci-après.

**EXEMPLE 1 : Préparation d'une silice hydrophobisée S1**

• **Etape A1** : *traitement d'une silice par de l'aluminium en milieu aqueux*

On a préparé une suspension aqueuse (s) de silice ayant une concentration de 150 g de $SiO_2$ par litre, en introduisant 3 g d'une silice de précipitation S (silice précipitée Zeosil 1165 MP commercialisée par la société Rhodia) dans 20 ml d'eau permutée, sous agitation.

A la suspension (s) de silice S précédemment réalisée, maintenue sous agitation, on a ajouté 0,78 g de chlorure d'aluminium anhydre $AlCl_3$ dissous dans de l'eau permutée à une concentration de 260 g/L en $AlCl_3$. La quantité d'aluminium introduite correspond à un taux de couverture théorique de la surface de la silice par les espèces aluminium de 7,4 Al par $nm^2$ (calculé en considérant que la surface disponible correspond à sa surface spécifique BET).

Le pH du milieu obtenu a été ajusté à 7,5 par ajout de soude 1,0 M, puis on a laissé le milieu sous agitation pendant 1 heure.

• **Etape B1** : *traitement par un acide alkylphosphonique*

On a ajouté au milieu aqueux issu de l'étape A1, maintenu sous agitation, une solution aqueuse d'acide octylphosphonique à 30 g/L, contenant 0,58 g d'acide octylphosphonique $C_8H_{17}PO_3H_2$ (Rhodia) dissous dans de l'eau permutée et ayant un pH de 6,5. La quantité d'acide phosphonique introduite correspond à une quantité de phosphore rapportée à la surface de la silice de 3,8 P par $nm^2$.

On a ensuite dilué le milieu par de l'eau permutée jusqu'à à obtenir une concentration en silice dans le milieu de 50 g/L. On a alors laissé le milieu sous agitation à température ambiante (20 °C) pendant 24 heures.

• **Etape C1 : lavages et séchage :**

A la suite de l'étape B1, la suspension de silice obtenue a été centrifugée et le surnageant a été éliminé. Le centrifugat obtenu a été lavé trois fois par redispersion dans 60 ml d'eau à chaque lavage, puis centrifugation. Le centrifugat final a été séché sous vide pendant une nuit (12 heures) à 80 °C.

On a ainsi obtenu une silice hydrophobisée S1, sous la forme d'une poudre.

**EXEMPLE 2 : Préparation d'une silice hydrophobisée S2**

• **Etape A2 : traitement d'une silice par de l'aluminium en milieu aqueux**

On a préparé une suspension aqueuse de silice (s) à 150 g de $SiO_2$ par litre, comme dans l'exemple A1, en dispersant sous agitation 3 g de la même silice de précipitation S dans 20 ml d'eau permutée.

A cette suspension de silice (s), maintenue sous agitation, on a introduit 0,62 g de chlorure d'aluminium anhydre $AlCl_3$ dissous dans de l'eau permutée à une concentration de 210 g/L en $AlCl_3$. La quantité d'aluminium ainsi introduite correspond à un taux de couverture théorique de la surface de la silice par les espèces aluminium de 6 Al par $nm^2$.

Le pH du milieu obtenu a été ajusté à 6,5 par addition de soude 1,0 M, puis on a laissé le milieu sous agitation pendant 30 minutes.

**• _Etape B2_** _: traitement par un acide alkylphosphonique_

On a ajouté au milieu aqueux issu de l'étape A2, maintenu sous agitation, une solution aqueuse d'acide octylphosphonique à 30 g/L, contenant 0,62 g d'acide octylphosphonique $C_8H_{17}PO_3H_2$ (Rhodia) dissous dans de l'eau permutée, et ayant un pH de 6,5. La quantité d'acide phosphonique introduite correspond à une quantité de phosphore rapportée à la surface de la silice de 4 P par $nm^2$.

On a ensuite dilué le milieu par de l'eau permutée jusqu'à à obtenir une concentration en silice dans le milieu de 50 g/L. On a alors laissé le milieu sous agitation à température ambiante (20 °C) pendant 30 minutes.

**• _Etape C2 : lavages et séchage_** _:_

A la suite de l'étape B2, la suspension de silice obtenue a été centrifugée et le surnageant a été éliminé. Le centrifugat obtenu a été lavé trois fois par redispersion dans 60 ml d'eau à chaque lavage, puis centrifugation. Le centrifugat final a été séché sous vide pendant une nuit (12 heures) à 80 °C.

On a ainsi obtenu une silice hydrophobisée S2, sous la forme d'une poudre

**EXEMPLE 3 : Préparation d'une silice hydrophobisée S3**

**• _Etape A3 : traitement d'une silice par de l'aluminium en milieu aqueux_**

Le traitement a été effectué dans les conditions de l'étape A2 de l'exemple 2, à la différence près que la solution aqueuse d'$AlCl_3$ de concentration égale à 210 g/L qui a été utilisée contient 0,15 g de chlorure d'aluminium anhydre dissous dans de l'eau permutée, la quantité d'aluminium introduite correspondant à un taux de couverture théorique de la surface de la silice par les espèces aluminium de 1,5 Al par $nm^2$.

**• _Etape B3_** _: traitement par un acide alkylphosphonique_

Ce traitement a été réalisé dans les conditions de l'étape B2 de l'exemple 2.
Ainsi, on a ajouté au milieu aqueux issu de l'étape A3, maintenu sous agitation, une solution aqueuse d'acide octylphosphonique à 30 g/L, contenant 0,62 g d'acide octylphosphonique dissous dans de l'eau permutée, et ayant un pH de 6,5. La quantité d'acide phosphonique introduite correspond à une quantité de phosphore rapportée à la surface de la silice de 4 P par $nm^2$. On a ensuite dilué le milieu par de l'eau permutée jusqu'à à obtenir une concentration en silice dans le milieu de 50 g/L. On a alors laissé le milieu sous agitation à température ambiante (20 °C) pendant 30 minutes.

**• _Etape C3_** _: lavages et séchage :_

A la suite de l'étape B3, la suspension de silice obtenue a été centrifugée et le surnageant a été éliminé. Le centrifugat obtenu a été lavé trois fois par redispersion dans 60 ml d'eau à chaque lavage, puis centrifugation. Le centrifugat final a été séché sous vide pendant une nuit (12 heures) à 80 °C.

On a ainsi obtenu une silice hydrophobisée S3, sous la forme d'une poudre.

**EXEMPLE 4 : Préparation d'une silice hydrophobisée S4**

**• _Etape A4_** _: traitement d'une silice par de l'aluminium en milieu aqueux_

Le traitement a été effectué dans les conditions de l'étape A2 de l'exemple 2, à la différence près que la solution aqueuse d'$AlCl_3$ de concentration égale à 210 g/L qui a été utilisée contient 0,38 g de chlorure d'aluminium anhydre dissous dans de l'eau permutée, la quantité d'aluminium introduite correspondant à un taux de couverture théorique de la surface de la silice par les espèces aluminium de 3,7 Al par $nm^2$.

**• _Etape B4_** _: traitement par un acide alkylphosphonique_

Ce traitement a été réalisé dans les conditions de l'étape B2 de l'exemple 2.

Ainsi, on a ajouté au milieu aqueux issu de l'étape A4, maintenu sous agitation, une solution aqueuse d'acide octylphosphonique à 30 g/L, contenant 0,62 g d'acide octylphosphonique dissous dans de l'eau permutée, et ayant un pH de 6,5. La quantité d'acide phosphonique introduite correspond à une quantité de phosphore rapportée à la surface de la silice de 4 P par $nm^2$. On a ensuite dilué le milieu par de l'eau permutée jusqu'à à obtenir une concentration en silice dans le milieu de 50 g/L. On a alors laissé le milieu sous agitation à température ambiante (20 °C) pendant 30

minutes.

• **<u>*Etape C4*</u>** *: lavages et séchage :*

A la suite de l'étape B4, la suspension de silice obtenue a été centrifugée et le surnageant a été éliminé. Le centrifugat obtenu a été lavé trois fois par redispersion dans 60 ml d'eau à chaque lavage, puis centrifugation. Le centrifugat final a été séché sous vide pendant une nuit (12 heures) à 80 °C.
On a ainsi obtenu une silice hydrophobisée S4, sous la forme d'une poudre.

**<u>EXEMPLE 5</u> : Préparation d'une silice hydrophobisée S5**

• **<u>*Etape A5*</u>** : *traitement d'une silice par de l'aluminium en milieu aqueux*

Ce traitement a été effectué dans les conditions de l'étape A2 de l'exemple 2, à savoir avec une quantité d'aluminium introduite correspondant à un taux de couverture théorique de la surface de la silice par les espèces aluminium de 6 Al par $nm^2$.

• **<u>*Etape B5*</u> : *traitement par un acide alkylphosphonique***

Ce traitement a été réalisé dans les conditions de l'étape B2 de l'exemple 2, à la différence que a solution aqueuse d'acide octylphosphonique à 30 g/L et de pH 6,5 contient 0,15 g d'acide octylphosphonique dissous dans de l'eau permutée, la quantité d'acide phosphonique introduite correspondant à une quantité de phosphore rapportée à la surface de la silice de 1 P par $nm^2$.

• **<u>*Etape C5*</u>** *: lavages et séchage :*

A la suite de l'étape B5, la suspension de silice obtenue a été centrifugée et le surnageant a été éliminé. Le centrifugat obtenu a été lavé trois fois par redispersion dans 60 ml d'eau à chaque lavage, puis centrifugation. Le centrifugat final a été séché sous vide pendant une nuit (12 heures) à 80 °C.
On a ainsi obtenu une silice hydrophobisée S5, sous la forme d'une poudre.

**<u>EXEMPLE 6</u> : Préparation d'une silice hydrophobisée S6**

• **<u>*Etape A6*</u>** *: traitement d'une silice par de l'aluminium en milieu aqueux*

Ce traitement a été effectué dans les conditions de l'étape A2 de l'exemple 2, à savoir avec une quantité d'aluminium introduite correspondant à un taux de couverture théorique de la surface de la silice par les espèces aluminium de 6 Al par $nm^2$.

• **<u>*Etape B6*</u>** *: traitement par un acide alkylphosphonique*

Ce traitement a été réalisé dans les conditions de l'étape B2 de l'exemple 2, à la différence que a solution aqueuse d'acide octylphosphonique à 30 g/L et de pH 6,5 contient 0,30 g d'acide octylphosphonique dissous dans de l'eau permutée, la quantité d'acide phosphonique introduite correspondant à une quantité de phosphore rapportée à la surface de la silice de 2 P par $nm^2$.

• **<u>*Etape C6*</u>** : *lavages et séchage* :

A la suite de l'étape B6, la suspension de silice obtenue a été centrifugée et le surnageant a été éliminé. Le centrifugat obtenu a été lavé trois fois par redispersion dans 60 ml d'eau à chaque lavage, puis centrifugation. Le centrifugat final a été séché sous vide pendant une nuit (12 heures) à 80 °C.
On a ainsi obtenu une silice hydrophobisée S6, sous la forme d'une poudre.

**<u>EXEMPLE 7</u> : Préparation d'une silice hydrophobisée S7**

• **<u>*Etape A7*</u>** *: traitement d'une silice par de l'aluminium en milieu aqueux*

Ce traitement a été effectué dans les conditions de l'étape A2 de l'exemple 2, à savoir avec une quantité d'aluminium introduite correspondant à un taux de couverture théorique de la surface de la silice par les espèces aluminium de 6 Al par nm$^2$.

• **_Etape B7 : traitement par un acide alkylphosphonique_**

Ce traitement a été réalisé dans les conditions de l'étape B2 de l'exemple 2, à la différence que a solution aqueuse d'acide octylphosphonique à 30 g/L et de pH 6,5 contient 0,91 g d'acide octylphosphonique dissous dans de l'eau permutée, la quantité d'acide phosphonique introduite correspondant à une quantité de phosphore rapportée à la surface de la silice de 6 P par nm$^2$.

• **_Etape C7_** _: lavages et séchage_ :

A la suite de l'étape B6, la suspension de silice obtenue a été centrifugée et le surnageant a été éliminé. Le centrifugat obtenu a été lavé trois fois par redispersion dans 60 ml d'eau à chaque lavage, puis centrifugation. Le centrifugat final a été séché sous vide pendant une nuit (12 heures) à 80 °C.
On a ainsi obtenu une silice hydrophobisée S7, sous la forme d'une poudre.

### EXEMPLE 8 : Caractérisation des silices hydrophobisée des exemples 1 à 7

Les silices S1 à S7 sous forme de poudre obtenues dans les exemples 1 à 7 ont été soumises aux tests suivants :

- spectroscopie infrarouge en réflexion diffuse : dans chaque cas, le spectre fait apparaître des bandes d'absorption dans la région 2800 à 3000 cm$^{-1}$, caractéristiques de liaisons C-H des groupes alkyles hydrophobes apportés par l'acide phosphonique.
- RMN $^{31}$P en phase solide : les spectres obtenus comportent systématiquement un pic dans la zone entre 0 à 30 ppm, caractéristique des liaisons P-O-Al des groupements alkylphosphonate greffés sur la silice.
- microscopie électronique à transmission : les clichés obtenus indiquent que la silice n'a pas changé de morphologie au cours de son traitement et que l'échantillon final est homogène.
- analyse élémentaire : cette analyse élémentaire permet d'accéder au taux de carbone contenu dans la silice testée (en % en masse), à partir duquel on peut établir le taux moyen D de couverture de la surface de la silice par les groupements $C_8H_{17}$. Ce taux de couverture D est calculé par la formule suivante :

$$D = \left(\frac{\%C}{n_c M_c} x N_a\right) x \frac{1}{S*(100 - \%C * \frac{M_{ac}}{n_c M_c})} x 10^{-18}$$

où :

%C indique la teneur en carbone dans la silice (en % en masse)
$N_a$ est le nombre d'Avogadro (en mol$^{-1}$)
$n_c$ désigne le nombre d'atomes de C dans l'acide octylphosphonique, soit 8 $M_{ac}$ désigne la masse molaire de l'acide (en g/mol)
$M_c$ désigne la masse molaire du carbone (en g/mol)
S désigne la surface spécifique BET de la silice initiale.

Les taux de carbone en % en masse (%C) mesurés par analyse élémentaire pour les silices S1 à S7, ainsi que les taux de couverture (D) calculés à partir de ces taux de carbone, sont reportés dans le tableau I ci-après.

- adsorption d'azote : elle permet de déterminer la surface spécifique BET de la silice modifiée, et également un coefficient C désigné ci-après par $C_{BET}$. Ce coefficient $C_{BET}$, calculé à partir de la pente d'absorption d'azote et de l'ordonnée à l'origine, reflète la polarité de surface de la silice, ce coefficient étant d'autant plus faible que la surface de la silice est hydrophobe. Pour plus de détails concernant ce coefficient et son mode de calcul, on pourra notamment se reporter au brevet US 6193142. Les valeurs des surface BET ($S_{BET}$) et des coefficients $C_{BET}$ des silices S1 à S7 sont reportées dans le tableau I ci-après, d'où il ressort que les silices présentent une surface peu polaire, ayant un coefficient $C_{BET}$ bien inférieur à celui de la silice S de départ.

- mesure du *"methanol number"* : ce test montre le caractère hydrophobe des silices testées. Plus précisément, la mesure du "méthanol number" est effectuée selon le protocole suivant : on a déposé 0,2 g de la silice à tester sur la surface de 50 ml d'eau dans un bécher de 250 ml. La silice, hydrophobe, n'est initialement pas mouillée par l'eau et reste en surface. On a ajouté progressivement du méthanol dans le milieu à l'aide d'une burette dont l'extrémité est plongée dans le milieu aqueux., jusqu'à ce que la silice soit mouillée par le liquide. Le "méthanol number" (MN) de la silice est calculé par la formule :

$$MN = v_{methanol} / (v_{eau} + v_{methanol}) \times 100$$

où:

- Veau désigne le volume d'eau initial, exprimé en ml (soit 50 ml) ; et
- $V_{methanol}$ désigne le volume de méthanol introduit, exprimé en ml, lorsqu'on obtient le mouillage complet de la silice.

Cette valeur de MN est reportée dans le tableau I ci-après pour chacun des exemples 1 à 7, d'où il ressort que les silices obtenues présentent des propriétés de surface hydrophobe marquées, avec des MN pouvant aller jusqu'à 60.

**Tableau I : propriétés des silices S1 à S7**

| Silice | S | S1 | S2 | S3 | S4 | S5 | S6 | S7 |
|---|---|---|---|---|---|---|---|---|
| taux théorique $Al/nm^2$ | - | 7,4 | 6 | 1,5 | 3,7 | 6 | 6 | 6 |
| taux théorique $P/nm^2$ | - | 3,8 | 4 | 4 | 4 | 1 | 2 | 6 |
| %C | 0,2% | 6,2% | 6,5% | 3,3 | 5,3 | 2,3 | 3,9 | 7,5 |
| D (nombre de $C_8H_{17}$ par $nm^2$) | - | 2,7 | 2.8 | 1,5 | 2,5 | 1,0 | 1,9 | 3,7 |
| $S_{BET}$ ($m^2/g$) | 150 | 132 | 130 | 135 | 137 | 135 | 140 | 132 |
| $C_{BET}$ | 112 | 29 | 34 | 67 | 44 | 47 | 36 | 34 |
| MN | 0 | 50 | 60 | 20 | 40 | 40 | 50 | 60 |

Les données comparées des exemples 2, 3 et 4 montrent l'évolution du taux moyen D de couverture de la surface de la silice par les groupements $C_8H_{17}$ et du MN en fonction de la quantité d'aluminium introduite (dans ces exemples, la quantité d'acide phosphonique introduite est constante, avec un taux de recouvrement théorique de la surface de la silice par l'acide de 4 $P/nm^2$).

De même, les exemples 2, 5, 6 et 7 illustrent l'évolution du taux moyen D et du MN en fonction de la quantité d'acide phosphonique introduite (dans ces exemples, la quantité d'aluminium introduite est constante, avec un taux de recouvrement théorique de la surface de la silice par l'aluminium de 6 $Al/nm^2$).

**Revendications**

1.  Procédé de modification de la surface d'une silice, qui comprend les étapes successives suivantes :

    (A) au sein d'un milieu aqueux, on traite une silice avec des cations d'aluminium capables de se fixer à la surface de ladite silice ; puis
    (B) au milieu aqueux obtenu, contenant la silice traitée dans l'étape (A), on introduit des molécules d'au moins un acide phosphonique,
    et on laisse réagir ces molécules d'acide phosphonique avec la silice traitée obtenue dans l'étape (A).

2.  Procédé selon la revendication 1, pour la préparation d'une silice greffée en surface par des chaînes hydrophobes, qui comprend les étapes successives suivantes :

    (A) au sein d'un milieu aqueux, on traite une silice avec des cations d'aluminium capables de se fixer à la surface de ladite silice, puis

(B) au milieu aqueux obtenu, contenant la silice traitée dans l'étape (A), on introduit des molécules d'au moins un acide phosphonique répondant à la formule (I) suivante :

$$R\text{-}PO(\text{-}OH)_2 \qquad (I)$$

où R est une chaîne hydrophobe,
et on laisse réagir ces molécules d'acide phosphonique avec la silice traitée obtenue dans l'étape (A).

**3.** Procédé selon la revendication 2, où les étapes (A) et (B) sont conduites dans les conditions suivantes :

(A) au sein d'un milieu aqueux, on traite une silice par des cations d'aluminium ; puis
(B) au milieu aqueux obtenu, contenant la silice traitée dans l'étape (A), on ajoute des molécules d'au moins un acide phosphonique répondant à la formule (I) telle que définie dans la revendication 2, et on laisse réagir ces molécules d'acide phosphonique avec la silice traitée avec un pH initial du milieu réactionnel de 6 à 10, de préférence de 6,5 à 8,5.

**4.** Procédé selon la revendication 3, où l'étape (A) est conduite à un pH de 6 à 10, de préférence de 6,5 à 8,5.

**5.** Procédé selon la revendication 3 ou 4, où les cations aluminium de l'étape (A) sont introduits dans le milieu aqueux de l'étape (A) sous forme d'AlCl$_3$.

**6.** Procédé selon l'une quelconque des revendications 1 à 5, où les milieux aqueux des étapes (A) et (B) contiennent de l'eau à titre d'unique solvant et dispersant.

**7.** Procédé selon l'une quelconque des revendications 1 à 6, où les étape (A) et (B) sont effectuées au sein d'un unique milieu aqueux où on fait d'abord réagir la silice avec les cations d'aluminium dans l'étape (A), et où on ajoute ensuite les molécules d'acide(s) phosphonique(s) dans l'étape (B), dans un unique réacteur.

**8.** Procédé selon l'une quelconque des revendications 1 à 7, où la silice qui est soumise au traitement de l'étape (A) est une silice de précipitation.

**9.** Procédé selon l'une quelconque des revendications 1 à 8, où la silice traitée dans l'étape (A) a initialement une surface spécifique BET d'au moins 50 m$^2$/g, avantageusement entre 50 et 400 m$^2$/g.

**10.** Procédé selon l'une quelconque des revendications 1 à 9, où la silice qui est soumise au traitement de l'étape (A) est introduite dans le milieu aqueux sous la forme d'objets dispersés ayant des dimensions inférieures à 1 $\mu$m, et de préférence inférieures à 500 nm.

**11.** Procédé selon l'une quelconque des revendications 1 à 10, où l'étape (B) est conduite à une température inférieure à 50°C.

**12.** Procédé selon l'une quelconque des revendications 1 à 11, où les étapes (A) et (B) sont conduites à température ambiante, par exemple entre 15 et 25°C.

**13.** Procédé selon l'une quelconque des revendications 1 à 12, où la concentration en silice dans le milieu aqueux de l'étape (B) est comprise entre 10 et 200 g/L.

**14.** Procédé selon l'une quelconque des revendications 1 à 13, où, dans l'étape (B), les molécules d'acide phosphonique de formule (I) sont introduites en quantité stoechiométrique ou sub-stoechiométrique par rapport aux sites réactifs de la silice modifiée issue de l'étape (A).

**15.** Procédé selon l'une quelconque des revendications 1 à 14, comportant en outre une étape (C) d'isolement de la silice obtenue à l'issue de l'étape (B).

**16.** Silice hydrophobisée susceptible d'être obtenue selon le procédé de l'une quelconque des revendications 2 à 15.

**17.** Silice hydrophobisée selon la revendication 16, où les chaînes R sont greffées sur une partie seulement de la surface disponible de ladite silice, la surface de la silice présentant des groupements silanols libres.

18. Utilisation d'une silice hydrophobisée selon la revendication 16 à titre de charge dans une composition hydrophobe.

19. Utilisation d'une silice hydrophobisée selon la revendication 16 à titre de charge renforçante dans une matrice à base de silicone(s).

20. Utilisation d'une silice hydrophobisée selon la revendication 16 à titre de charge dans une matrice à base d'élastomère(s), en particulier clair(s) ou semi-clair(s), pour semelles de chaussures, à titre de charge dans une matrice thermoplastique, à titre de support de liquide, ou à titre de charge dans une composition de dentifrice.

21. Utilisation d'une silice hydrophobisée selon la revendication 17 à titre d'intermédiaires pour la synthèse de silices porteuses à la fois des chaînes hydrophobes R précités et, d'autres groupes, introduits en faisant réagir les groupements silanols libres de la surface avec des composés de type organosilanes.

**Patentansprüche**

1. Verfahren zur Modifizierung der Oberfläche eines Siliciumdioxids, das die folgenden aufeinanderfolgenden Schritte umfasst:

   (A) ein Siliciumdioxid wird in einem wässrigen Medium mit Aluminium-Kationen, die an die Oberfläche des Siliciumdioxids binden können, behandelt, dann
   (B) in das erhaltene wässrige Medium, das das in Schritt (A) behandelte Siliciumdioxid enthält, werden Moleküle mindestens einer Phosphonsäure eingetragen,
   und diese Phosphonsäuremoleküle werden mit dem in Schritt (A) erhaltenen behandelten Siliciumdioxid reagieren gelassen.

2. Verfahren nach Anspruch 1 zur Herstellung eines an der Oberfläche mit hydrophoben Ketten gepfropften Siliciumdioxids, das die folgenden aufeinanderfolgenden Schritte umfasst:

   (A) ein Siliciumdioxid wird in einem wässrigen Medium mit Aluminium-Kationen, die an die Oberfläche des Siliciumdioxids binden können, behandelt, dann
   (B) in das erhaltene wässrige Medium, das das in Schritt (A) behandelte Siliciumdioxid enthält, werden Moleküle mindestens einer Phosphonsäure der folgenden Formel (I):

$$R\text{-}PO(\text{-}OH)_2 \qquad (I)$$

   wobei R für eine hydrophobe Kette steht, eingetragen
   und diese Phosphonsäuremoleküle werden mit dem in Schritt (A) erhaltenen behandelten Siliciumdioxid reagieren gelassen.

3. Verfahren nach Anspruch 2, wobei die Schritte (A) und (B) unter den folgenden Bedingungen durchgeführt werden:

   (A) ein Siliciumdioxid wird in einem wässrigen Medium mit Aluminium-Kationen behandelt; dann
   (B) in das erhaltene wässrige Medium, das das in Schritt (A) behandelte Siliciumdioxid enthält, werden Moleküle mindestens einer Phosphonsäure der Formel (I) gemäß Anspruch 2 eingetragen und diese Phosphonsäuremoleküle werden mit dem behandelten Siliciumdioxid mit einem Anfangs-pH-Wert des Reaktionsmediums von 6 bis 10 und vorzugsweise 6,5 bis 8,5 reagieren gelassen.

4. Verfahren nach Anspruch 3, wobei der Schritt (A) bei einem pH-Wert von 6 bis 10 und vorzugsweise 6,5 bis 8,5 durchgeführt wird.

5. Verfahren nach Anspruch 3 oder 4, wobei die Aluminium-Kationen von Schritt (A) in Form von $AlCl_3$ in das wässrige Medium von Schritt (A) eingetragen werden.

6. Verfahren nach einem der Ansprüche 1 bis 5, wobei die wässrigen Medien der Schritte (A) und (B) als einziges Lösungs- und Dispergiermittel Wasser enthalten.

7. Verfahren nach einem der Ansprüche 1 bis 6, wobei die Schritte (A) und (B) in einem einzigen wässrigen Medium in einem einzigen Reaktor durchgeführt werden, wobei zunächst in Schritt (A) das Siliciumdioxid mit den Aluminium-Kationen umgesetzt wird und dann in Schritt (B) die Phosphonsäuremoleküle zugegeben werden.

8. Verfahren nach einem der Ansprüche 1 bis 7, wobei es sich bei dem Siliciumdioxid, dass der Behandlung von Schritt (A) unterworfen wird, um ein gefälltes Siliciumdioxid handelt.

9. Verfahren nach einem der Ansprüche 1 bis 8, wobei das in Schritt (A) behandelte Siliciumdioxid anfangs eine spezifische BET-Oberfläche von mindestens 50 m$^2$/g und vorteilhafterweise zwischen 50 und 400 m$^2$/g aufweist.

10. Verfahren nach einem der Ansprüche 1 bis 9, wobei das Siliciumdioxid, das der Behandlung von Schritt (A) unterworfen wird, in Form von dispergierten Objekten mit Abmessungen von weniger als 1 $\mu$m und vorzugsweise weniger als 500 nm in das wässrige Medium eingetragen wird.

11. Verfahren nach einem der Ansprüche 1 bis 10, wobei der Schritt (B) bei einer Temperatur von weniger als 50°C durchgeführt wird.

12. Verfahren nach einem der Ansprüche 1 bis 11, wobei die Schritte (A) und (B) bei Umgebungstemperatur, beispielsweise zwischen 15 und 25°C, durchgeführt werden.

13. Verfahren nach einem der Ansprüche 1 bis 12, wobei die Siliciumdioxid-Konzentration in dem wässrigen Medium von Schritt (B) zwischen 10 und 200 g/L liegt.

14. Verfahren nach einem der Ansprüche 1 bis 13, wobei in Schritt (B) die Moleküle der Phosphonsäure der Formel (I) in stöchiometrischer oder unterstöchiometrischer Menge, bezogen auf die reaktiven Zentren des modifizierten Siliciumdioxids aus Schritt (A), eingetragen werden.

15. Verfahren nach einem der Ansprüche 1 bis 14, das außerdem einen Schritt (C) der Isolierung des am Ende von Schritt (B) erhaltenen Siliciumdioxids umfasst.

16. Hydrophobiertes Siliciumdioxid, das nach dem Verfahren eines der Ansprüche 2 bis 15 erhältlich ist.

17. Hydrophobiertes Siliciumdioxid nach Anspruch 16, wobei die Ketten R nur auf einen Teil der verfügbaren Oberfläche des Siliciumdioxids aufgepfropft sind, wobei die Oberfläche des Siliciumdioxids freie Silanolgruppen aufweist.

18. Verwendung eines hydrophobierten Siliciumdioxids nach Anspruch 16 als Füllstoff in einer hydrophoben Zusammensetzung.

19. Verwendung eines hydrophobierten Siliciumdioxids nach Anspruch 16 als verstärkender Füllstoff in einer Matrix auf Basis von Silikon(en).

20. Verwendung eines hydrophobierten Siliciumdioxids nach Anspruch 16 als Füllstoff in einer Matrix auf Basis von Elastomer(en), insbesondere klarem (klaren) oder halbklarem (halbklaren) Elastomer(en), für Schuhsohlen, als Füllstoff in einer thermoplastischen Matrix, als Flüssigkeitsträger oder als Füllstoff in einer Zahnpastazusammensetzung.

21. Verwendung eines hydrophobierten Siliciumdioxids nach Anspruch 17 als Zwischenprodukte für die Synthese von Siliciumdioxiden, die sowohl die oben aufgeführten hydrophoben Ketten R als auch andere Gruppen, die durch Reaktion der freien Silanolgruppen der Oberfläche mit Verbindungen vom Organosilan-Typ eingeführt werden, tragen.

**Claims**

1. Process for modifying the surface of a silica, which comprises the following successive steps:

    (A) within an aqueous medium, a silica is treated with aluminium cations capable of attaching to the surface of said silica; then
    (B) introduced into the aqueous medium obtained, containing the silica treated in step (A), are molecules of at least one phosphonic acid,
and these phosphonic acid molecules are left to react with the treated silica obtained in step (A).

2. Process according to Claim 1, for the preparation of a silica surface-grafted by hydrophobic chains, which comprises the following successive steps:

   (A) within an aqueous medium, a silica is treated with aluminium cations capable of attaching to the surface of said silica; then
   (B) introduced into the aqueous medium obtained, containing the silica treated in step (A), are molecules of at least one phosphonic acid corresponding to the formula (I) below:

   $$R\text{-}PO(\text{-}OH)_2 \qquad (I)$$

   where R is a hydrophobic chain,
   and these phosphonic acid molecules are left to react with the treated silica obtained in step (A).

3. Process according to Claim 2, where steps (A) and (B) are carried out under the following conditions:

   (A) within an aqueous medium, a silica is treated with aluminium cations; then
   (B) added to the aqueous medium obtained, containing the silica treated in step (A), are molecules of at least one phosphonic acid corresponding to the formula (I) as defined in Claim 2, and these phosphonic acid molecules are left to react with the treated silica with an initial pH of the reaction medium of 6 to 10, preferably of 6.5 to 8.5.

4. Process according to Claim 3, where step (A) is carried out at a pH of 6 to 10, preferably of 6.5 to 8.5.

5. Process according to Claim 3 or 4, where the aluminium cations of step (A) are introduced into the aqueous medium of step (A) in the form of $AlCl_3$.

6. Process according to any one of Claims 1 to 5, where the aqueous media of steps (A) and (B) contain water as sole solvent and dispersant.

7. Process according to any one of Claims 1 to 6, where steps (A) and (B) are carried out within a single aqueous medium where the silica is firstly reacted with the aluminium cations in step (A), and where the molecules of phosphonic acid(s) are then added in step (B), in a single reactor.

8. Process according to any one of Claims 1 to 7, where the silica which is subjected to the treatment of step (A) is a precipitated silica.

9. Process according to any one of Claims 1 to 8, where the silica treated in step (A) initially has a BET specific surface area of at least 50 m2 /g, advantageously between 50 and 400 $m^2$/g.

10. Process according to any one of Claims 1 to 9, where the silica which is subjected to the treatment of step (A) is introduced into the aqueous medium in the form of dispersed articles having dimensions of less than 1 $\mu$m, and preferably of less than 500 nm.

11. Process according to any one of Claims 1 to 10, where step (B) is carried out at a temperature below 50°C.

12. Process according to any one of Claims 1 to 11, where steps (A) and (B) are carried out at ambient temperature, for example between 15 and 25°C.

13. Process according to any one of Claims 1 to 12, where the concentration of silica in the aqueous medium of step (B) is between 10 and 200 g/l.

14. Process according to any one of Claims 1 to 13, where, in step (B), the molecules of phosphonic acid of formula (I) are introduced in a stoichiometric or substoichiometric amount relative to the reactive sites of the modified silica resulting from step (A).

15. Process according to any one of Claims 1 to 14, additionally comprising a step (C) of isolating the silica obtained at the end of step (B).

16. Hydrophobized silica capable of being obtained according to the process of any one of Claims 2 to 15.

17. Hydrophobized silica according to Claim 16, where the R chains are grafted to one portion only of the available surface of said silica, the surface of the silica having free silanol groups.

18. Use of a hydrophobized silica according to Claim 16 as filler in a hydrophobic composition.

19. Use of a hydrophobized silica according to Claim 16 as reinforcing filler in a matrix based on silicone(s).

20. Use of a hydrophobized silica according to Claim 16 as filler in a matrix based on elastomer(s), in particular clear or semi-clear elastomer(s), for shoe soles, as filler in a thermoplastic matrix, as liquid support, or as filler in a toothpaste composition.

21. Use of a hydrophobized silica according to Claim 17 as intermediates for the synthesis of silicas bearing both aforementioned R hydrophobic chains and other groups, introduced by reacting the free silanol groups of the surface with compounds of organosilane type.

## RÉFÉRENCES CITÉES DANS LA DESCRIPTION

**Documents brevets cités dans la description**

- EP 1559744 A
- JP 57168954 A
- FR 2831178
- WO 03055801 A
- US 6193142 B

**Littérature non-brevet citée dans la description**

- *The journal of the American Chemical Society,* Février 1938, vol. 60, 309